# EUROPEAN PATENT APPLICATION

(11) **EP 2 772 851 A1**
(43) Date of publication of application: **03.09.2014**
(21) Application number: 13157121.8
(22) Date of filing: 28.02.2013
(51) Int. Cl.: G06F 9/445

(54) **Customizing a GUI of a MES screen**

(71) Applicant: Siemens Aktiengesellschaft, 80333 München (DE)
(72) Inventor: Belotti, Simone, 16148 Genova (IT); Noferi, Stefano, 16149 Genova (IT)
(74) Representative: Maier, Daniel Oliver

(57) **Abstract**

The present invention provides a method and system for customizing a user-interface of a page-screen of a general purpose MES software application taking into account a set of customer requirements; comprising: providing within the MES application a page-screen containing a configurable graphic control that comprises a custom area customizable via a plugin; providing a graphic configuration tool for enabling the configuration of the configurable graphic control; further including, at engineering time: providing also a configurable plugin, wherein its software code comprises an additional configurable graphic control comprising its custom area customizable via a nested plugin; specifying, through the configuration tool, the information of the configurable plugin; exploring the page-screen so that, under the node representing the configurable graphic control, a tree is presented in which there is at least one node representing the configurable plugin having, underneath, at least one node representing the additional configurable graphic control; selecting a specific node representing a specific additional configurable graphic control comprising an associated custom area to be customized according to an additional given customer requirement; providing the nested plugin which meets said additional given customer requirement; specifying the information of the nested plugin for linking it to the custom area of the additional configurable graphic control.

## Description

The present invention relates to a method and to a system for customizing a GUI of a MES screen according to the preamble of claims 1 and 7 respectively.

As defined by the Manufacturing Enterprise Solutions Association (MESA International), a MES system "is a dynamic information system that drives effective execution of manufacturing operations", by managing "production operations from point of order release into manufacturing to point of product delivery into finished goods" and by providing "mission critical information about production activities to others across the organization and supply chain via bidirectional communication." The international standard for developing MES systems is commonly referred as ISA-95 or S95.

The goal of MES systems developed by software suppliers is to provide manufacturing companies (the customers) with tools for measuring and controlling production activities with the aim of boosting profitability, increasing productivity, improving quality and process performance in manufacturing plants.

As used herein, a software application is a set of software components developed by software developers to perform some useful actions within a MES system, e.g. monitoring values coming from plant process or controlling a plant device.

Typically, at engineering or configuration time, system engineers flexibly customize MES applications according to specific customer requirements.

Instead, at runtime, MES applications are utilized by end-users who may be plant operators or line responsible personnel.

Usually, MES systems are provided with front-end/client GUI applications which are used by end-users to plan and control manufacturing activities.

MES GUI applications play a key role in bringing together process, quality and business information from various sources into one unified real-time view of the production status of the plant. In fact, MES GUI applications display to the end-user graphical screens which enable overview several parameters or scenarios of the plant activities.

Nowadays MES screens are mostly developed in form of web-pages.

For example, with MES application suite SIMATIC IT, it is provided a Client Application Builder which is composed of a set of modules allowing users to build customized GUI screen-pages.

Typically, software suppliers develop a MES software-product as a general purpose solution to meet several different customer requirements. As a consequence to it, also the collections of MES screens, which are supplied with the MES product, are designed to be general purpose in order to be used in various different situations.
However, since customers usually require that MES products be customized for a specific project fitting their specific needs, also the GUIs of MES screens need to be customized in order to satisfy the customer requirements of the specific project. This customer need is a fundamental one since the end-users, at the customer site, interact with the MES product mainly through the GUI of the MES-screens.
In summary:
- Usually, the web pages screens of MES products are delivered to the customer with predefined layouts and, thus, MES screens developed at the product level often have to be customized to match customers' needs.

As taught in the description of the European Patent Application number 11195274.3 filed by Siemens, hereinafter referred as Document A [Ref.1], in order to obtain this requirement without changing the source code of the page screens, a configuration system has been proposed for customizing the layout and the behavior of the page-screens. Document A[Ref.1] describes a technique for customizing a user-interface of a screen of a general purpose MES software application taking into account a specific customer requirement. The configuration system according to Document A [Ref.1] comprises a graphic configuration tool enabling the configuration of a configurable graphic control of the page screen. Such configurable graphic control contains at least a custom area. At engineering time, an additional ASP.net control is developed by writing its software code to implement the specific customer requirement. The developed additional ASP.net control acts as a plugin and it allows to add or to deeply modify the functionalities of a page screen: the graphic configuration tool itself allows browsing and selecting a custom area of the configurable graphic control and linking it to the developed plugin software code.
Hence, thanks to the technique disclosed in Document A [Ref.1], system integrators are enabled to customize the product screens by adding some plugins in predefined custom areas of the configurable graphic controls.
With such technique, it is possible to develop plugins which meet specific needs of a specific customer without changing the source code of the page screen. However, with such a technique, the developed plugins cover only the specific requirement for which they were developed for.

In fact, the drawback of this technique is that, in case it is desired to implement slight changes to the plugin behavior, the source code of the plugin itself has to be changed and a fix might need to be released. Hence, in real case scenarios, the probability of re-using the developed plugin in different page screens of same or of different customers is very low since slight behavioral changes are often required. As a consequence, due to the fact that slight changes of the plugin behavior are often required, the drawback of this technique is that it often leads to a growth of similar plugins to meet similar different customer needs. Up to now this problem has been solved by developing a multitude of plugins in order to satisfy all the required customer needs and desired features.
It is evident to the skilled in the art, the involved costs in maintaining the software codes of a large number of plugins.
For example, it is often the case that the customization of the product page-screens is made per industry, e.g. pharmaceutical, automotive etc.
Thus MES product page-screens are delivered to the customer after having being customized through configurations and through developed plugins to satisfy general requirements of the customer specific industry.

However, when the system integrators of the customers receive the product page-screens which are usually industry specific, they still need to provide additional customizations to match the specific requirements of the specific customer project. Up until now, the system integrator problem is that they are unable to configure the plugins delivered together with the original page screen, since in order to change the behaviour of one given plugin they had to rewrite the given plugin code and substitute the delivered given plugin with their own new custom plugin.

It is therefore the aim of the present invention to overcome the above mentioned drawbacks, in particular by providing a method and a system for customizing a GUI of a MES screen without modifying the source code of a given plugin to be used together with the page-screen.

The aforementioned aim is achieved by a method and a system for customizing a user-interface of a screen of a general purpose MES software application taking into account a set of customer requirements, the screen being a web-page, hereinafter called page-screen; comprising:
a) providing within the MES application at least one page-screen containing at least one configurable graphic control that comprises at least one area that can be customized via at least one plugin, the one area being called custom area;
b) providing a graphic configuration tool for enabling the configuration of the configurable graphic control of the page-screen user-interface in the at least one custom area; further comprising:
c) enabling the at least one plugin to be configured; the plugin being called configurable plugin;
d) enabling the configuration tool to configure the configurable plugin;
e) at engineering time, through the configuration tool, exploring the page-screen so that, a tree is presented in which there is at least one node representing a configurable graphic control;
f) at engineering time, selecting a given node representing a given configurable graphic control and at least one associated custom area to be customized according to a given customer requirement thorough the configurable plugin;
g) at engineering time, providing the configurable plugin, wherein its software code comprises at least one additional configurable graphic control comprising its custom area customizable via a nested plugin;
h) at engineering time, specifying, through the configuration tool, the information of the configurable plugin for linking it to the custom area of the configurable graphic control;
i) at engineering time, through the configuration tool, exploring the page-screen so that, under the node representing the configurable graphic control, a tree is presented in which there is at least one node representing the configurable plugin having, underneath, at least one node representing the at least one additional configurable graphic control;
j) at engineering time, selecting a specific node representing a specific additional configurable graphic control comprising at least one associated custom area to be customized according to an additional given customer requirement;
k) at engineering time, providing the nested plugin which meets the additional given customer requirement;
l) at engineering time, specifying, through the configuration tool, the information of the nested plugin for linking it to the custom area of the additional configurable graphic control.

In invention embodiments, a nested plugin may be conveniently enabled to be configurable as well in order to meet further customer requirement by including in its software code at least one further configurable graphic control comprising at least one associated custom area customizable via a sub-nested plugin; and by performing items i) to l) accordingly, e.g. where the terms "configurable graphic control" are substituted with the terms "further configurable control", the terms "additional given customer requirement" with the terms "further customer requirement", the terms "configurable plugin" with the terms "configurable nested plugin", the terms "nested plugin" with the terms "sub-nested plugin".

In invention embodiments, at run time, a user-interface of a screen of a general purpose MES software application may preferably be customized according to the invention or its embodiments.

Invention embodiments may advantageously include the storing, at engineering time, of the information of items h) and l) on the web server or on a database.

Furthermore, a computer program element can be provided, comprising computer program code for performing steps according to the above mentioned method when loaded in a digital processor of a computing device.

Additionally, a computer program product stored on a computer usable medium can be provided, comprising computer readable program code for causing a computing device to perform the mentioned method.

With invention embodiments, it is provided a wide set of new possibilities of customizations of the existing general purpose page screens according to required specific customer needs, so that MES screens can be customized through a hierarchical plugin configuration system.
Such new possible customizations do not require that system integrators re-write the code of the original page screen nor the code of its configurable plugin.

This result is obtained without the need to re-write the code of the original screen, but only by configuring the needed portions of the screens.

With invention embodiments, the core technology of the configuration system is integrated in the plugin technology, in such a way that the technology developed for the page configuration has been extended also to the plugins so as to render them configurable as well. In this manner, it is possible to create a wide set of new possibilities of customization of existing screens since by lowering the amount of time needed to create the scenarios required by the customers and by making it easier to create an integrated solution.

With invention embodiments, the configurable plugins created at a product or at a project level can be put together to create an entire library of customizations. In such a way, thanks to the short time needed to plug them in the existing page screens, it is possible to significantly lower the cost needed to make specific MES customer projects, thus being more competitive on the market.

The long time result of embodiments of the invention may conveniently be the creation of a set of general plugins that are specialized through their configuration for different needs. Once such library will be rich enough, it would be then fast and cheap to meet the customization requirements of the customers, and the process will be codeless.

With invention embodiments, not only the amount of time needed to create the customer customized scenario is greatly lowered but also maintenance costs are minimized.

Invention embodiments are compatible with the existing structure of the plugin developed with technique described in Document A [Ref.1]. This means that also plugins which are previously developed with the technique of Document A [Ref.1], i.e. plugins which have configurable controls on the inside, benefit of the newly added configuration feature so that such plugins become configurable plugins.

Invention embodiments allow a high degree of design flexibility since they enable a recursive creation of nested plugins.

In summary, the truly interesting feature of the configurable plugin is its capability to support other plugins. Such capability is advantageously achieved without any additional effort in the development process: when the plugin is built with configurable controls, these controls already have built-in support for plugins. In this way, other plugins can be added to an existing plugin to change or specialize its behavior and layout. As said, this process can be done recursively, allowing a great degree of flexibility.

### Brief Description of the Drawings

The invention will now be described in preferred but not exclusive embodiments with reference to the accompanying drawings, wherein:
- Figure 1: is a snapshot example of a GUI configuration editor of the GUI configuration tool, according to an example embodiment of the previously described technique of Document A [Ref.1].
- Figure 2: is a snapshot example of a GUI configuration editor of the GUI configuration tool, according to an example embodiment of the present invention.

According to the invention, a user-interface of a page-screen of a general purpose MES software application taking into account a set of customer requirements is customized. It is noted that the terms "general purpose" as used herein denote a MES product that require some specific customization being of general purpose. However, even an industry specific MES product is to be considered in this context to be of "general purpose" because it is not specifically customized according to specific needs of a given customer or project but only according to some specific needs of a given industry.

Within the MES application, it is provided at least one page-screen containing at least one configurable graphic control that contains at least one custom area that can be customized via a plugin.

A graphic configuration tool is provided for enabling the configuration of the configurable graphic control of the page-screen user-interface in at least one custom area.

In addition, according to the proposed invention, the plugin is configurable through the graphic configuration tool.

At engineering time, through the configuration tool, the page-screen is explored so that, a tree is presented in which there is at least one node representing a configurable graphic control.

At engineering time, a given node is selected, representing a given configurable graphic control, and at least one associated custom area to be customized according to a given customer requirement through the configurable plugin.

At engineering time, the configurable plugin meeting the given customer requirement is provided. The software code of the provided configurable plugin comprises at least one additional configurable graphic control comprising at least one additional custom area which is customizable via another plugin, called nested plugin.

At engineering time, through the configuration tool, it is specified the information of the configurable plugin for linking it to the custom area of the configurable graphic control. Such information may conveniently be stored in a web-server or database. Such stored information is any information adequate to identify the plugin in an univocal manner.

At engineering time, through the configuration tool, the page-screen is explored so that, under the node representing the configurable plugin, a tree is presented in which there is at least one node representing the configurable plugin having, underneath, at least one node representing the at least one additional configurable graphic control.

At engineering time, a specific node is selected, representing a specific additional configurable graphic control comprising at least one associated custom area to be customized according to an additional given customer requirement.

At engineering time, the nested plugin meeting the additional given customer requirement is provided.

At engineering time, through the configuration tool, it is specified the information of the nested plugin for linking it to the custom area of the additional configurable graphic control. Such information may conveniently be stored on a web-server or database.

At run time, a user-interface of a screen of a general purpose MES software application may advantageously be displayed with the above described customizations.

In embodiments of the invention, the proposed invention can be reiterated so that the nested plugin may advantageously rendered configurable in order to meet further customer requirements by including in its software code at least one further configurable graphic control comprising at least one associated custom area customizable via a sub-nested plugin. In further embodiments, the sub-nested plugin may also become a configurable plugin itself so as to obtain a recursive hierarchy of configurable plugins.

### Example Embodiment: master-detail view

According to an example embodiment of the present invention, it may be advantageously possible to specify custom procedures for adding detail information to a master/detail view in the user-interface of the page-screen.

In this example embodiment, a communication mechanism placed in the page-screen is preferably provided to allow at run time exchanging information between a configurable graphic control already present in the page-screen and the developed plugin. For example, the type of the configurable graphic control may be tab type, panel type or a grid type.

Let us suppose that the page-screen, not shown, comprise a master grid with a set of MES entities and that a first customer wishes to improve its usability by extending it with some details about a selected entry on the master grid. For example, the MES entities of the master grid are the working time on a shift calendar and the need of the first customer is to extend it so as to show also the breaks defined for a working time.

The technique disclosed in Document A [Ref.1] enables to implement the extension required by the first customer.

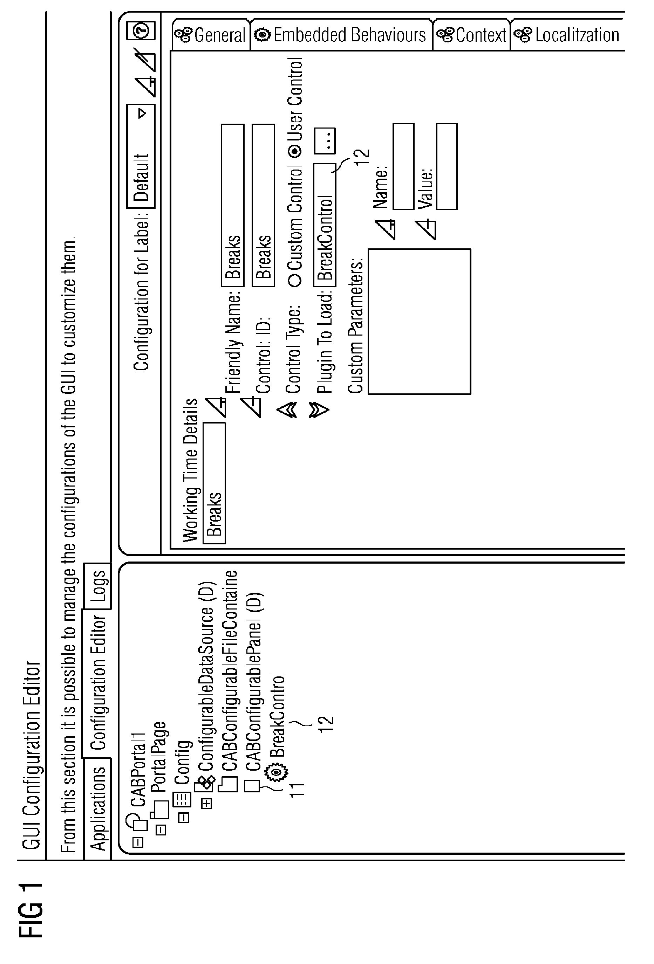

Figure 1 is a snapshot example of a GUI configuration editor of the GUI configuration tool, for implementing such requirement of the first customer.

According to the technique described in Document A [Ref.1], in order to satisfy the requirement of the first customer, the system integrator has to be provided with a plugin. The provided plugin may have been developed by the system integrator himself/herself or alternatively may have been developed by the software developer.
Then, the system integrator has to open the configuration tool and select the configurable control that contains a custom area. In Figure 1 such configurable control with a custom area is called "CABConfigurablePanel" 11. In turn, the system integrator links the plugin to the custom area. In Figure 1 the plugin to be loaded on the custom area of the Config Page is called "BreakControl" 12.

It is noted that, on the left side of the window shown in Figure 1, underneath the "BreakControl" 22 plugin node there are no more nodes, with the drawback of restraining the possibility to reuse the developed plugin 22.
In fact, let us suppose we are in a scenario in which a second customer needs a customization on the same page-screen of the first customer by additionally requiring an additional information on the plugin, for example who is/are the person/s currently on a selected break. In such a case, according to the previously described technique, the system integrator of the second customer would have to develop a new plugin by duplicating the code of the previously described plugin in order to add the additional desired feature.

Instead, with the proposed invention, the system integrator of the second customer is enabled to advantageously reuse the original plugin since it is a configurable plugin that can be extended with the new required functionality. The configuration tool is extended with all the available configuration points of the configurable plugin so that the system integrator can change the layout and the behaviours of the plugin without changing the source code of the plugin itself: Instead of requiring the substitution of the plugin, only a plugin configuration is required.

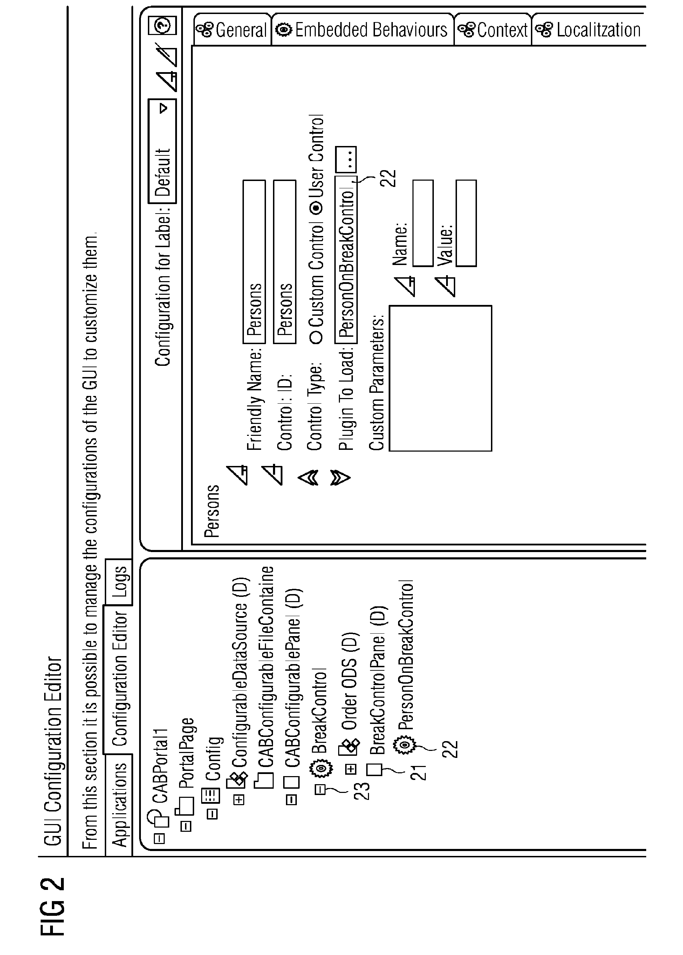

Figure 2 is a snapshot example of a GUI configuration editor of the GUI configuration tool, for implementing the requirement of the second customer, according to an example embodiment of the present invention.

In order to do that, the system integrator has first to develop a new additional plugin which meets the new required feature, this new plugin in this example is called "PersonOnBreakControl" 22. In turn, she/he selects the configurable control that contains the custom area, in this example called "BreakControlPanel" 21. The system integrators links the newly developed additional plugin "PersonOnBreakControl" 22 to the "BreakControlPanel" 21 custom area.

As it can be seen in Figure 2, "BreakControl" plugin 23 is a configurable plugin enabled to support additional plugins on its inside, since it contain another configurable control with a custom area thus enabling in another level of configuration. When the "BreakControl" plugin 23 is plugged in the page, the configuration system recognizes it and through the configuration tool it is possible to configure its properties and behaviors.

As it is seen in Figure 2, the "PersonOnBreakControl" plugin 22 is inside the "Break Control plugin 23. Advantageously, it is possible to configure also the behaviour and the properties of the "PersonOnBreakControl" plugin 22.

In addition to the embodiments of the present invention described above, the skilled persons in the art will be able to arrive at a variety of other arrangements and steps which, if not explicitly described in this document, nevertheless fall within the scope of the appended claims. For example, with embodiments of the present invention, it is possible to modify the master view in the master-detail view.

### References

- [Ref.1]: European Patent Application number 11195274.3
Applicant: Siemens
Inventors: Belotti Simone, Noferi Stefano

## Claims

1. A method for customizing a user-interface of a screen of a general purpose MES software application taking into account a set of customer requirements, the screen being a web-page, hereinafter called page-screen;
the method comprising the steps of:
a) providing within the MES application at least one page-screen containing at least one configurable graphic control that comprises at least one area that can be customized via at least one plugin, said one area being called custom area;
b) providing a graphic configuration tool for enabling the configuration of the configurable graphic control of the page-screen user-interface in the at least one custom area;
**characterized in that** the method further comprises the steps of:
c) enabling the at least one plugin to be configured; said plugin being called configurable plugin;
d) enabling the configuration tool to configure the configurable plugin;
e) at engineering time, through the configuration tool, exploring the page-screen so that, a tree is presented in which there is at least one node representing a configurable graphic control;
f) at engineering time, selecting a given node representing a given configurable graphic control and at least one associated custom area to be customized according to a given customer requirement thorough the configurable plugin;
g) at engineering time, providing said configurable plugin, wherein its software code comprises at least one additional configurable graphic control comprising its custom area customizable via a nested plugin;
h) at engineering time, specifying, through the configuration tool, the information of the configurable plugin for linking it to the custom area of the configurable graphic control;
i) at engineering time, through the configuration tool, exploring the page-screen so that, under the node representing the configurable graphic control, a tree is presented in which there is at least one node representing the configurable plugin having, underneath, at least one node representing the at least one additional configurable graphic control;
j) at engineering time, selecting a specific node representing a specific additional configurable graphic control comprising at least one associated custom area to be customized according to an additional given customer requirement;
k) at engineering time, providing the nested plugin which meets said additional given customer requirement;
l) at engineering time, specifying, through the configuration tool, the information of the nested plugin for linking it to the custom area of the additional configurable graphic control.

2. The method according to claim 1, wherein a nested plugin is enabled to be configurable as well in order to meet further customer requirement by including in its software code at least one further configurable graphic control comprising at least one associated custom area customizable via a sub-nested plugin; and by performing steps i) to l) accordingly, e.g. where the terms "configurable graphic control" are substituted with the terms "further configurable control", the terms "additional given customer requirement" with the terms "further customer requirement", the terms "configurable plugin" with the terms "configurable nested plugin", the terms "nested plugin" with the terms "sub-nested plugin".

3. A method for displaying, at run time, a user-interface of a screen of a general purpose MES software application is customized according to the method of any of the previous claims.

4. The method according to any of the previous claims, further including the step of storing, at engineering time, the information of steps h) and l) on the web server or on a database.

5. A software computer program having instructions for performing the steps of any of the previous method claims.

6. A system having means for performing the steps of the method according to any of the previous method claims.

7. A system for customizing a user-interface of a screen of a general purpose MES software application taking into account a set of customer requirements, the screen being a web-page, hereinafter called page-screen;
the system comprising:
a) means for providing within the MES application at least one page-screen containing at least one configurable graphic control that comprises at least one area that can be customized via at least one plugin, said one area being called custom area;
b) means for providing a graphic configuration tool for enabling the configuration of the configurable graphic control of the page-screen user-interface in the at least one custom area;
**characterized in that** the system further comprises:
c) means for enabling the at least one plugin to be configured; said plugin being called configurable plugin;
d) means for enabling the configuration tool to configure the configurable plugin;
e) means for exploring, at engineering time, through the configuration tool, the page-screen so that, a tree is presented in which there is at least one node representing a configurable graphic control;
f) means for selecting, at engineering time, a given node representing a given configurable graphic control and at least one associated custom area to be customized according to a given customer requirement thorough the configurable plugin;
g) means for providing, at engineering time, said configurable plugin, wherein its software code comprises at least one additional configurable graphic control comprising its custom area customizable via a nested plugin;
h) means for specifying, at engineering time, through the configuration tool, the information of the configurable plugin for linking it to the custom area of the configurable graphic control;
i) means for exploring, at engineering time, through the configuration tool, the page-screen so that, under the node representing the configurable graphic control, a tree is presented in which there is at least one node representing the configurable plugin having, underneath, at least one node representing the at least one additional configurable graphic control;
j) means for selecting, at engineering time, a specific node representing a specific additional configurable graphic control comprising at least one associated custom area to be customized according to an additional given customer requirement;
k) means for providing, at engineering time, the nested plugin which meets said additional given customer requirement;
l) means for specifying, at engineering time, through the configuration tool, the information of the nested plugin for linking it to the custom area of the additional configurable graphic control.
